# EUROPÄISCHE PATENTSCHRIFT

(11) **EP 4 032 243 B1**
(45) Veröffentlichungstag und Bekanntmachung des Hinweises auf die Patenterteilung: **19.03.2025**
(21) Anmeldenummer: 20760828.2
(22) Anmeldetag: 20.08.2020
(51) Int. Cl.: H04L 9/40, H04L 67/12

(54) **SYSTEM UND VERFAHREN ZUM MANIPULATIONSSICHEREN VERWALTEN VON DATEN EINES FELDGERÄTS DER AUTOMATISIERUNGSTECHNIK**
SYSTEM AND METHOD FOR MANAGING DATA OF AN AUTOMATION FIELD DEVICE IN A SECURE MANNER AGAINST MANIPULATION
SYSTÈME ET PROCÉDÉ DE GESTION DE DONNÉES D'UN APPAREIL DE TERRAIN DE LA TECHNIQUE D'AUTOMATISATION DE MANIÈRE SÉCURISÉE CONTRE LA MANIPULATION

(30) Priorität: 18.09.2019 DE 102019125092
(43) Veröffentlichungstag der Anmeldung: 27.07.2022
(73) Patentinhaber: Endress+Hauser SE+Co. KG, 79689 Maulburg (DE)
(72) Erfinder: BARET, Marc, 68680 Kembs (FR); BIRGEL, Eric, 79650 Schopfheim (DE); SCHUMANN, Benedikt, 79576 Weil am Rhein (DE); MERKLIN, Simon, 79353 Bahlingen a. K. (DE); FREY, Volker, 79650 Schopfheim (DE)
(74) Vertreter: Endress + Hauser Group Services (Deutschland) AG+Co. KG
(86) Internationale Anmeldenummer: PCT/EP2020/073404
(87) Internationale Veröffentlichungsnummer: WO 2021/052708

(56) Entgegenhaltungen:
- WO-A1-2018/059855
- FAKHRY IRFAN ASFY ET AL: "Blockchain-Based for Calibration of Digital Multimeter System Design", 2018 INTERNATIONAL CONFERENCE ON ICT FOR SMART SOCIETY (ICISS), IEEE, 10 October 2018 (2018-10-10), pages 1 - 6, XP033459197, DOI: 10.1109/ICTSS.2018.8549924
- DITTMANN GERO ET AL: "A Blockchain Proxy for Lightweight IoT Devices", 2019 CRYPTO VALLEY CONFERENCE ON BLOCKCHAIN TECHNOLOGY (CVCBT), IEEE, 24 June 2019 (2019-06-24), pages 82 - 85, XP033590955, DOI: 10.1109/CVCBT.2019.00015

## Beschreibung

Die Erfindung betrifft ein System und ein Verfahren zum manipulationssicheren Verwalten von Daten eines Feldgeräts mittels einer dezentralen Datenbank nach der Distributed-Ledger-Technik, insbesondere eine Blockchain, wobei die dezentrale Datenbank eine Vielzahl von Teilnehmerknoten, bestehend aus validierfähigen und/oder leseberechtigen Teilnehmerknoten, umfasst, wobei ein Feldgerät der Automatisierungstechnik bereitgestellt wird, welches eine Elektronikeinheit und eine Kommunikationsschnittstelle aufweist.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Daten, bzw. Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Feldgeräte erstellen eine Vielzahl unterschiedlicher Daten. Bei diesen Daten handelt es neben bereits oben genannten Messdaten von Sensoren, durch welche ein Anlagenbetreiber Informationen über die aktuellen Prozesswerte der Messstellen seiner Anlage erhält, beispielsweise um Steuerdaten, bspw. zur Stellregelung eines Aktors. Des Weiteren handelt es sich bei den Daten um Diagnose-, Historien-, und/oder Statusdaten, durch die der Anlagenbetreiber über Probleme der Feldgeräte, bzw. dem aktuellen Status der einzelnen Feldgeräte informiert wird, oder um Kalibrier- /Parametrierdaten.

Heutzutage ist es üblich, diese Daten an einer zentralen Stelle in der Anlage zu speichern, beispielsweise in einer Datenbank in einem Workstation-PC in der Leitebene der Anlage. Dies jedoch mit Nachteilen verbunden: Fällt die Datenbank aus, bzw. wird die Datenbank zerstört, bzw. unlesbar, so sind die auf dieser Datenbank gespeicherten Daten verloren.

Bestimmte Applikationen, bzw. Teile einer Anlage müssen behördlich abgenommen werden. Hierbei ist es essentiell, dass Kalibrierzertifikate der Feldgeräte erstellt werden und dass die von dem Feldgerät erzeugten Daten entsprechend des Kalibrierzertifikats erstellt, bzw. diesem zugeordnet werden können.

Heutzutage werden diese Daten, bzw. die Kalibrierzertifikate, vor Ort in einem elektronischen Betriebstage aufgezeichnet. Zur Überprüfung muss eine Behörde zum Anlagenbetreiber vor Ort gehen und dieses Betriebstagebuch auf Richtigkeit prüfen. Sowohl von Seiten des Anlagenbetreibers, als auch der Behörde, ist daher ein Ressourcenaufwand benötigt. Der Ressourcenaufwand des Anlagenbetreibers liegt beispielsweise in der Beschaffung und der Erhaltung der notwendigen technischen Mittel und dem Sicherstellen, dass die Daten unveränderbar im Betriebstagebuch gespeichert werden. Das Betriebstagebuch muss darüber hinaus sofort verfügbar sein, wenn die Behörde dieses anfordert. Der Ressourcenaufwand der Behörde liegt beispielsweise im Einsatz von Personal, welches zur Anlage vor Ort gehen und die Daten dort überprüfen muss.

Häufig sind die Systeme, welche das Betriebstagebuch und die Mittel zum Übertragen und Aufzeichnen der Daten beinhalten, nur proprietär für einzelne Feldgerätehersteller erhältlich. Ein solches proprietäres System ist Anlagenbetreibern jedoch unbeliebt, da es zusätzlichen Wartungsaufwand und Komplexität für die Anlage mit sich bringt.

Die Aufgabe der vorliegenden Erfindung besteht daher darin, eine manipulationssichere und ortsunabhängige Alternative zu einem Betriebstagebuch anzugeben.

Die Aufgabe wird durch ein System zum manipulationssicheren Verwalten von Daten eines Feldgeräts der Automatisierungstechnik gemäß Anspruch 1, sowie durch ein Verfahren gemäß Anspruch 10 gelöst.

Hinsichtlich des Systems ist vorgesehen, dass dieses umfasst:
- Eine dezentrale Datenbank nach der Distributed-Ledger-Technik, insbesondere eine Blockchain,
- umfassend eine Vielzahl von Teilnehmerknoten, umfassend validierfähige Teilnehmerknoten;
- Ein Feldgerät der Automatisierungstechnik,
   mit einer Elektronikeinheit, wobei die Elektronikeinheit ausgestaltet ist, einen Distributed-Ledger-Softwarestack auszuführen, und
   mit einer Kommunikationsschnittstelle zum Aufbauen einer Kommunikationsverbindung zu der dezentralen Datenbank über ein drahtloses oder drahtgebundenes Kommunikationsnetzwerk,
   wobei das Feldgerät ausgestaltet ist, Daten zu erzeugen, umfassend nachweispflichtige Messwerte und/oder Kalibrierzertifikate,
   wobei das Feldgerät nach Ausführen des Distributed-Ledgers-Softwarestacks als Light-Node der dezentralen Datenbank wirkt und ausgestaltet ist, die Daten über das Kommunikationsnetzwerk an die dezentrale Datenbank zu übermitteln, mit einem Zeitstempel zu versehen und verschlüsselt in die dezentrale Datenbank zu schreiben,
- wobei die validierfähigen Teilnehmerknoten ausgestaltet sind, die übermittelten Daten zu validieren, wobei die dezentrale Datenbank ausgestaltet ist, die Daten zu speichern, wenn zumindest ein vorbestimmten Anteil der validierfähigen Teilnehmerknoten die Daten erfolgreich validiert.

Das erfindungsgemäße System erlaubt ein manipulationssicheres Speichern von Daten eines Feldgeräts, beispielsweise dessen nachweispflichtige Messwerte und/oder Kalibrierzertifikate mittels Verwendens einer Distributed-Ledger-Datenbank. Ein Beispiel für eine solche Datenbank ist die Blockchain-Technologie. Es existieren jedoch auch weitere Technologien für Distributed-Ledger-Datenbanken, beispielsweise basierend auf der Technologie "block directed acyclic graphs (blockDAG)" oder "transaction-based directed acyclic graphs (TDAG)".

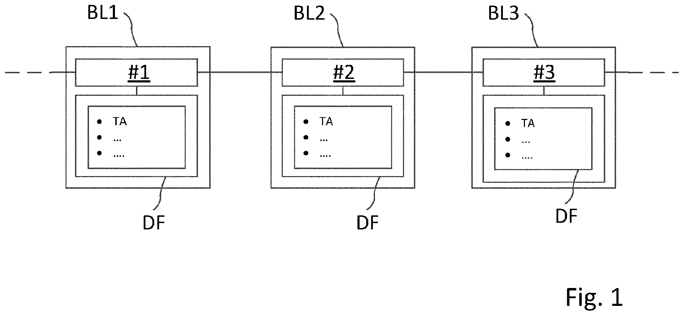

Eine solche Distributed-Ledger-Datenbank ist dezentral auf einer Vielzahl von Recheneinheiten, die miteinander in Kommunikationsverbindung stehen, ausgebildet. Diese Recheneinheiten werden als Teilnehmer bezeichnet. Es existieren verschiedene Typen von Teilnehmern:
Full-Nodes, speichern jeweils ein Abbild der Datenbank. Des Weiteren diesen diese dem Verifizieren von Transaktionen, also beispielsweise dem Speichern/Hinzufügen neuer Daten in der Datenbank. Ebenso dienen diese zum Berechnen neuer "Blöcke" (siehe Beschreibung zur Fig. 1). Im Zusammenhang mit der Erfindung sind alle Full-Nodes validierfähige Teilnehmerknoten.

Als Light-Nodes werden Teilnehmerknoten genannt, die nur eingeschränkte Funktionalitäten verglichen zu den Full-Nodes aufweisen. Beispielsweise kann es vorgesehen sein, dass diese nur Daten auf die Datenbank schreiben können, aber der Inhalt der Datenbank nicht auf einem Light-Node gespeichert wird und/oder dass diese nicht an Verifizierungen oder Berechnungen neuer "Blöcke" partizipieren.

Dadurch, dass die Daten des Feldgeräts verschlüsselt in der Datenbank gespeichert werden, sind diese zwar auf allen Full-Nodes enthalten, jedoch nur von Teilnehmerknoten lesbar, welche Details bezüglich der Verschlüsselung, also beispielsweise einen Schlüssel, enthalten.

Feldgeräte, welche im Zusammenhang mit der Erfindung erwähnt werden, sind bereits beispielhaft im einleitenden Teil der Beschreibung aufgeführt worden.

Gemäß einer vorteilhaften Weiterbildung des erfindungsgemäßen Systems ist vorgesehen, dass die dezentrale Datenbank zusätzlich leseberechtige Teilnehmerknoten umfasst, wobei die leseberechtigten Teilnehmerknoten ausgestaltet sind, die gespeicherten Daten des Feldgeräts in der dezentralen Datenbank zu entschlüsseln und zu lesen. Die leseberechtigen Teilnehmerknoten können sowohl Full-Nodes als auch Light-Nodes sein. Die leseberechtigen Teilnehmerknoten besitzen Kenntnisse bezüglich der Verschlüsselung und haben beispielsweise den zur Entschlüsselung benötigten Schlüssel ("Public-Key") erhalten. Über solche Teilnehmerknoten können beispielsweise der Anlagenbetreiber oder Behörden Zugriff auf die gespeicherten Daten erlangen.

Gemäß einer bevorzugten Weiterbildung des erfindungsgemäßen Systems ist vorgesehen, dass zumindest einer der Teilnehmerknoten, oder ein mit der dezentralen Datenbank verbundenes Gerät, ausgestaltet ist, ein Analyseprogramm auszuführen,
wobei das Analyseprogramm ausgestaltet ist, Alarmmeldungen auf Basis einer Analyse der in der dezentralen Datenbank gespeicherten nachweispflichtige Messwerte des Feldgeräts zu generieren.

Die Messwerte können also nicht nur zu Dokumentationszwecken/Nachweiszwecken gespeichert werden, sondern für eine "Predictive Maintenance"-Anwendung verwendet werden.

In einer vorteilhaften Ausgestaltung des erfindungsgemäßen Systems ist vorgesehen, dass das Analyseprogramm ausgestaltet ist, die gespeicherten nachweispflichtigen Messwerte des Feldgeräts im Zuge der Analyse mit zumindest einem vorbestimmten Grenzwert zu vergleichen, und wobei das Analyseprogramm ausgestaltet ist, die Alarmmeldung in dem Falle zu generieren, wenn zumindest einer der nachweispflichtigen Messwerte den vorbestimmten Grenzwert überschreitet, bzw. unterschreitet.

In einer vorteilhaften Ausgestaltung des erfindungsgemäßen Systems ist vorgesehen, dass die dezentrale Datenbank ausgestaltet ist, Smart Contracts als Programmcode mittels den Teilnehmerknoten zu speichern und auszuführen. Smart Contracts sind Computerprotokolle, die Verträge abbilden oder überprüfen oder die Verhandlung oder Abwicklung eines Vertrags technisch unterstützen. Die Smart Contracts werden beispielsweise beim Lesen der Daten des Feldgeräts von dem jeweiligen leseberechtigten Teilnehmerknoten geladen und ausgeführt. Beispielsweise ermöglicht das Ausführen eines solchen Smart Contracts das Überprüfen des Kalibrierzertifikats, beispielsweise ob dieses für einen bestimmten Messwert des Feldgeräts überhaupt noch gültig war. Des Weiteren können mittels eines Smart Contracts Strafzahlungen erhoben werden, falls ein vom Feldgerät ermittelter Messwert unerlaubte Abweichungen zeigt, oder ein Kalibrierzertifikat abgelaufen ist.

Ein obig beschriebenes Analyseprogramm kann analog zu einem Smart Contract auf der Datenbank integriert sein und ausgeführt werden.

In einer vorteilhaften Ausgestaltung des erfindungsgemäßen Systems ist vorgesehen, dass es sich bei der dezentralen Datenbank um eine private Datenbank handelt. Eine private Datenbank steht nur einer bestimmten Gruppe zur Verfügung. Im Gegensatz zu einer öffentlichen datenbank gibt es hier einen oder mehrere Verantwortliche, die sich um die Instandhaltung der Datenbank kümmern. Sie bestimmen zum Beispiel auch wer welche Aktionen ausführen und wer Zugang zu bestimmten Daten auf der Datenbank erhält.

In einer vorteilhaften Ausgestaltung des erfindungsgemäßen Systems ist vorgesehen, dass das Kommunikationsnetzwerk auf einem Ethernetprotokoll beruht. Falls die Kommunikationsschnittstelle des Feldgeräts eine drahtlose Kommunikation erlaubt, so können Wide-Range-Standards wie 5G, LTE etc. verwendet werden.

In einer vorteilhaften Ausgestaltung des erfindungsgemäßen Systems ist vorgesehen, dass das Feldgerät als Light-Node der dezentralen Datenbank dazu ausgestaltet ist, die über das Kommunikationsnetzwerk übermittelten Daten mit einem Zeitstempel zu versehen. Dadurch können beispielsweise die nachweispflichtigen Messwerte einem bestimmten Kalibrierzertifikat zugeordnet werden. Kalibrierzertifikate beinhalten Informationen über den Gültigkeitsbeginn und das Gültigkeitsende des Kalibrierzertifikats.

In einer vorteilhaften Ausgestaltung des erfindungsgemäßen Systems umfasst das erfindungsgemäße System zusätzlich einen weiteren Light-Node der dezentralen Datenbank in Form Automatisierungskomponente, insbesondere eine Steuereinheit, oder eines weiteren Feldgeräts, wobei der weitere Light-Node einen Zeitgeber aufweist und ausgestaltet ist, Zeitstempel zu generieren und an die dezentrale Datenbank zu übermitteln, wobei die dezentrale Datenbank ausgestaltet ist, die in den Daten des Feldgeräts enthaltenen Zeitstempel mit den Zeitstempel des weiteren Light-Nodes abzugleichen. Der weitere Light-Node, der insbesondere eine zu dem Feldgerät benachbarte Automatisierungskomponente ist, also beispielsweise in derselben Messstelle eingesetzte Automatisierungskomponente, dient als weitere Instanz zu verlässlichen Daten des Feldgeräts, indem er den Zeitstempel verifiziert.

Hinsichtlich des Verfahrens ist vorgesehen, dass dieses die folgenden Verfahrensschritte umfasst:
- Etablieren einer Kommunikationsverbindung zwischen dem Feldgerät und der dezentralen Datenbank mittels der Kommunikationsschnittstelle über ein drahtgebundenes oder drahtloses Kommunikationsnetzwerk;
- Hinzufügen des Feldgeräts zu der dezentralen Datenbank als Light-Node durch Ausführen eines Distributed-Ledger-Softwarestack mittels der Elektronikeinheit;
- Erzeugen von Daten mittels des Feldgeräts, umfassend nachweispflichtige Messwerte und/oder Kalibrierzertifikate;
- Übermitteln der Daten über das Kommunikationsnetzwerk an die dezentrale Datenbank über das Kommunikationsnetzwerk, wobei die Daten verschlüsselt werden;
- Validieren der dezentralen Datenbank mittels der validierfähigen Teilnehmerknoten;
- Schreiben der Daten in die dezentrale Datenbank, wenn zumindest ein vorbestimmter Anteil der validierfähigen Teilnehmerknoten die Daten erfolgreich validiert.

Gemäß einer vorteilhaften Ausgestaltung des erfindungsgemäßen Verfahrens ist vorgesehen, dass das Verfahren zusätzlich ein Entschlüsseln und Lesen der Daten mittels der leseberechtigten Teilnehmerknoten umfasst.

Die Erfindung wird anhand der nachfolgenden Figuren näher erläutert. Es zeigen
Fig. 1: eine Erläuterung einer Datenbank, welche entsprechend der Distributed-Ledger-Technologie ausgestaltet sind; und
Fig: 2: ein Ausführungsbeispiel des erfindungsgemäßen Systems.

Fig. 1 zeigt eine Erläuterung einer Datenbank DB, welche entsprechend einer Distributed-Ledger-Technologie ausgestaltet sind. Im vorliegenden Fall basiert die datenbank DB auf der Blockchain-Technologie. Die Blockchain-Technologie wurde als Backbone der Internet-Währung "Bitcoin" bekannt. Eine Blockchain, also eine Kette verknüpfter Datenblöcke BL1, BL2, BL3 erlaubt eine hohe Datenintegrität. Im Folgenden sei die Funktionsweise einer Datenbank DB, welche für die Erfindung verwendet wird, kurz erläutert.

Ein besagter Datenblock BL1, BL2, BL3 besteht in der Regel aus zumindest zwei Komponenten: Zum einem ist das ein Datenfeld DF. In diesem Datenfeld DF sind Daten in Form von Transaktionen TA gespeichert. Als Transaktion TA wird eine Übermittlung der Daten von einem ersten Teilnehmerknoten TK1, TK2, ..., TK6 zu einem zweiten Teilnehmerknoten TK1, TK2, ..., TK6 in einem Kommunikationsnetzwerk, beispielsweise das Internet, bezeichnet. Eine Transaktion TA enthält einen übermittelten Wert, beispielsweise Daten des Feldgeräts FG, sowie den Sender und den Empfänger der Transaktion TA. Als Teilnehmerknoten TK1, TK2, ..., TK6 werden alle Geräte bezeichnet, welche die Datenbank bilden, bzw. mit dieser verbunden sind und die Distributed-Ledger-Funktionalität erlauben.

Ein Datenfeld DF eines Datenblocks BL1, BL2, BL3 enthält zumindest eine Transaktion TA, häufiger mehrere Transaktionen TA.

Zum anderen enthält ein Datenblock BL1, BL2, BL3 eine Prüfsumme #1, #2, #3. Eine solche Prüfsumme #1, #2, #3 ist ein Hashwert und wird durch mitunter aufwendige Berechnungen erstellt. Hierfür werden alle Transaktionen TA des Datenfelds eines Blocks BL1, BL2, BL3 zu einem Zwischenwert berechnet. Hierfür wird beispielsweise die Merkle-Root der Gesamtzahl der Transaktionen TA berechnet. Auf das genaue Funktionsprinzip wird an dieser Stelle nicht eingegangen. Es sei hierfür beispielsweise auf https://en.wikipedia.org/wiki/Merkle_tree verwiesen.

Dieser errechnete Zwischenwert wird anschließend mit der Prüfsumme #1, #2, #3 des vorherigen Datenblocks BL1, BL2, BL3 zur Prüfsumme #1, #2, #3 des aktuellen Datenblocks BL1, BL2, BL3 verrechnet. Beispielsweise enthält der in Fig. 1 gezeigte Datenblock BL2 eine Prüfsumme #2. Diese Prüfsumme #2 wurde also aus den in dem Datenfeld DF des Datenblocks B2 gespeicherten Transaktionen TA und der Prüfsumme #1 des vorangehenden Datenblocks BL1 berechnet. Analog dazu enthält der in Fig. 1 gezeigte Datenblock BL3 eine Prüfsumme #3. Diese Prüfsumme #3 wurde also aus den in dem Datenfeld DF des Datenblocks B3 gespeicherten Transaktionen TA und der Prüfsumme #2 des vorangehenden Datenblocks BL2 berechnet.

Die Integrität der Daten, also die Sicherung der Daten gegen nachträgliche Manipulationen, ist somit durch die Speicherung der Prüfsumme #1, #2, #3 des vorangehenden Datenblocks BL1, BL2 im jeweils nachfolgenden Datenblock BL2, BL3 gesichert. Eine Blockchain besteht also aus einer Reihe von Datenblöcken BL1, BL2, BL3, in denen jeweils eine oder mehrere Transaktionen TA zusammengefasst und mit der Prüfsumme #1, #2, #3 versehen sind. Eine Änderung von Daten erzeugt einen geänderten Zwischenwert, wodurch auch die Prüfsumme #1, #2, #3 des jeweiligen Datenblocks BL1, BL2, BL3 verändert wird. Der darauffolgende Datenblock BL1, BL2, BL3 passt somit nicht mehr zu dem vorangehenden Datenblock BL1, BL2, BL3. Daten eines einmal erfolgreich validierten Datenblocks BL1, BL2, BL3 sind dadurch für einen Angreifer nicht mehr veränderbar.

Neue Datenblöcke BL1, BL2, BL3 werden in regelmäßigen Zeitabständen erstellt. In das Datenfeld des neuen Datenblocks BL1, BL2, BL3 werden alle Transaktionen TA gespeichert, welche nach dem Zeitpunkt der erstellen des letzten Datenblocks BL1, BL2, BL3 erstellt wurden.

Die Komplexität der Blockerstellung kann dadurch erhöht werden, dass die erstellte Prüfsumme #1, #2, #3 ein vorgegebenes Format aufweisen muss. Beispielsweise wird festgelegt, dass die Prüfsumme 24 Stellen lang sein muss, wobei die ersten vier Stellen den Zahlenwert 0 aufweisen müssen. Hierfür wird neben dem Zwischenwert der Transaktionen TA und der Prüfsumme des vorherigen Datenblocks eine zu ermittelnde Zahlenfolge, als "Nonce" bezeichnet, mit einer festgelegten Länge zur Berechnung der Prüfsumme #1, #2. #3 des aktuellen Datenblocks BL1, BL2, BL3 verwendet. Die Berechnung der neuen Prüfsumme #1, #2, #3 dauert entsprechend länger, da nur wenige Noncen vorhanden sind, welche zur Berechnung einer Prüfsumme #1, #2, #3 mit den vorgegebenen Kriterien führen. Das Auffinden einer solchen geeigneten Nonce verursacht hierbei den beschriebenen zusätzlichen Zeitaufwand.

Nachdem die Prüfsumme #1, #2, #3 eines neuen Datenblocks BL1, BL2, BL3 erstellt wurde, wird der Datenblock an alle Teilnehmerknoten TK1, TK2, ..., TK6 übermittelt. Die validierungsfähigen Teilnehmerknoten TK1, TK2, TK3, TK4 überprüfen nun die Prüfsumme #1, #2, #3 des neuen Datenblocks BL1, BL2, BL3. Erst nach erfolgreicher Validierung wird der Datenblock BL1, BL2, BL3 in allen Teilnehmerknoten TK gespeichert. Insbesondere wird hierzu eine erfolgreiche Validierung von mehr als der Hälfte aller validierungsfähigen Teilnehmerknoten TK1, TK2, TK3, TK4 benötigt. Ein Angreifer müsste daher zum Einschleusen/Erstellen eines fremden, schädlichen Datenblocks BL1, BL2, BL3 eine große Anzahl an validierungsfähigen Teilnehmerknoten TK1, TK2, TK3, TK4 manipulieren, bzw. kontrollieren, um den eingeschleusten Datenblock BL1, BL2, BL3 erfolgreich zu validieren. Bei steigender Anzahl an validierungsfähigen Teilnehmerknoten TK1, TK2, TK3, TK4 ist dies als so gut wie unmöglich anzusehen.

Für die Validierung eines Datenblocks BL1, BL2, BL3 ist ein wesentlich geringerer Aufwand als zur Erstellung des Datenblocks BL1, BL2, BL3 nötig. Die Prüfsumme #1, #2, #3 wird rückgerechnet, der Zwischenwert der Transaktionen TA, bzw. die Prüfsumme #1, #2, #3 des vorherigen Datenblocks BL1, BL2, BL3 zurückgewonnen und mit dem tatsächlichen Zwischenwert, bzw. mit der tatsächlichen Prüfsumme #1, #2, #3 des vorherigen Datenblock BL1, BL2, BL3 verglichen. Stimmen diese Werte überein, so ist der Datenblock BL1, BL2, BL3 erfolgreich validiert.

Im Folgenden ist beschrieben, wie mithilfe einer solche Datenbank DB Daten eines Feldgeräts der Prozessautomatisierung manipulationssicher gespeichert und zu Nachweiszwecken ausgelesen werden können:

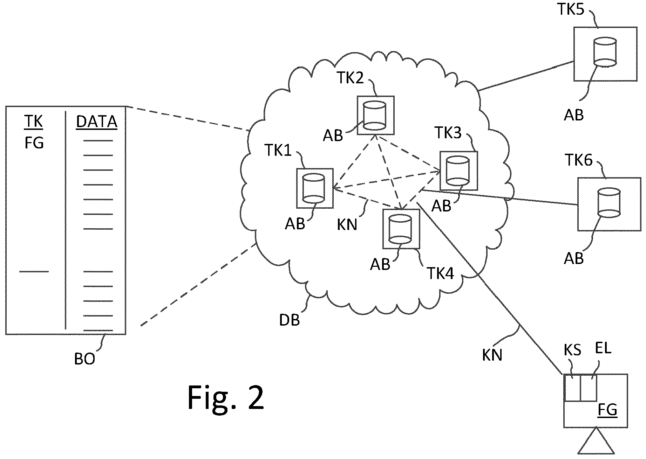

In Fig. 2 ist das erfindungsgemäße System schematisch dargestellt. Die Datenbank DB, die wie obig beschrieben aufgebaut ist, besteht im Kern aus vier Teilnehmerknoten TK1, TK2, TK3, TK4, welche als Full-Nodes ausgebildet sind. Diese speichern jeweils ein Abbild AB des Inhalts der Datenbank DB, also die Kette der Datenblöcke DB1, DB2, DB3. Zwei weitere, lesefähige Teilnehmerknoten TK5, TK6 sind mit der Datenbank DB verbunden. Des Weiteren wird ein Feldgerät FG der Automatisierungstechnik mittels einer Kommunikationsschnittstelle KS via einem Kommunikationsnetzwerk KN, insbesondere Ethernet-basiert, mit der Datenbank DB verbunden.

Durch Ausführen eines Distributed-Ledger-Softwarestacks das Feldgerät FG einen Teilnehmerknoten und wirkt in der Datenbank DB als Light-Node, kann also Daten in die Datenbank DB schreiben. Es kann jedoch keine Transaktionen verifizieren. Ebenso enthält es kein Abbild AB des Inhaltes der Datenbank DB.

Das Feldgerät FG erfasst nachweispflichtige Messwerte, welche in unregelmäßigen Zeitabständen von einer Behörde überprüft werden müssen. Aus diesem Grund lädt das Feldgerät diese Messwerte und zugehörige Kalibrierzertifikate als Daten DATA in die Datenbank DB. Vor dem Übermitteln verschlüsselt die Datenbank diese Daten DATA mit einem private key. Anschließend werden die übermittelten Daten DATA als Transaktion TA von den validierungsfähigen Teilnehmerknoten TK1, TK2, TK3, TK4 validiert und in einem Datenfeld DF eines Datenblocks der Datenbank gespeichert.

Zur Überprüfung kann die Behörde mittels eines Rechners, der als lesefähiger Teilnehmerknoten TK5 fungiert, auf die Datenbank DB zugreifen und die Daten DATA auslesen. Hierfür hat der Teilnehmerknoten TK5 im Vorfeld einen public key erhalten, mittels dessen die Entschlüsselung ermöglicht ist.

Auf dieselbe Weise ist es dem Anlagenbetreiber ermöglicht, mittels eines Rechners, der als lesefähiger Teilnehmerknoten TK6 fungiert, auf die Datenbank DB zuzugreifen und die Daten DATA auszulesen.

Beiden Teilnehmerknoten TK5, TK6 wird ein Dashboard BO angezeigt, welches die Daten visualisiert. Im vorliegenden Falle besteht das Dashboard DO aus zwei Spalten. Die erste Spalte zeigt den Namen des Teilnehmerknotens TK1, ..., TK6, dessen Daten gespeichert werden. Die zweite Spalte zeigt die zu dem in der ersten Spalte dargestellten Teilnehmerknoten TK1, ..., TK6 zugeordneten Daten, also beispielsweise die Messwerte des Feldgeräts FG und eventuell zugeordnete Kalibrierzertifikate.

Als weiteres Feature können sogenannte Smart Contracts in der Datenbank DB gespeichert werden. Smart Contracts sind Computerprotokolle, die Verträge abbilden oder überprüfen oder die Verhandlung oder Abwicklung eines Vertrags technisch unterstützen. Diese können als Programmcode mittels den Teilnehmerknoten TK1, ..., TK6, in der Datenbank gespeichert und ausgeführt werden. Das Ausführen erfolgt insbesondere beim Lesen der Daten DATA auf den lesefähigen Teilnehmerknoten TK5, TK6. Beispielsweise ermöglicht das Ausführen eines solchen Smart Contracts das Überprüfen des Kalibrierzertifikats, beispielsweise ob dieses für einen bestimmten Messwert des Feldgeräts überhaupt noch gültig war. Des Weiteren können mittels eines Smart Contracts Strafzahlungen erhoben werden, falls ein vom Feldgerät FG ermittelter Messwert unerlaubte Abweichungen zeigt, oder ein Kalibrierzertifikat abgelaufen ist.

Analog zu den Smart Contracts können Analyseprogramme in der Datenbank DB gespeichert werden, die beim Lesen der Daten mittels den Teilnehmerknoten TK5, TK6 ausgeführt werden können. Ein solches Analyseprogramm dient beispielsweise dem Zweck, die gespeicherten nachweispflichtigen Messwerte des Feldgeräts FG im Zuge der Analyse mit zumindest einem vorbestimmten Grenzwert zu vergleichen und eine Alarmmeldung in dem Falle zu generieren, wenn zumindest einer der nachweispflichtigen Messwerte den vorbestimmten Grenzwert überschreitet, bzw. unterschreitet.

### Bezugszeichenliste

- BL1, BL2, BL3: Datenblock
- BO: Dashboard
- DB: dezentrale Datenbank
- DATA: Daten
- EL: Elektronikeinheit
- FG: Feldgerät
- KN: Kommunikationsnetzwerk
- KS: Kommunikationsschnittstelle
- TA: Transaktion
- TE: Transaktionserstellungseinheit
- TK1, ..., TK6: Teilnehmerknoten
- #1, #2, #3: Hashwerte der Datenblöcke

## Patentansprüche

1. System zum manipulationssicheren Verwalten von Daten eines Feldgeräts (FG) der Automatisierungstechnik, umfassend:
- Eine dezentrale Datenbank (DB) nach der Distributed-Ledger-Technik, insbesondere eine Blockchain,
umfassend eine Vielzahl von Teilnehmerknoten (TK1, TK2, ..., TK6), umfassend validierfähige Teilnehmerknoten (TK1, TK2, TK3, TK4) und leseberechtigte Teilnehmerknoten (TK5, TK6), wobei die leseberechtigten Teilnehmerknoten (TK5, TK6) ausgestaltet sind, die gespeicherten Daten (DATA) des Feldgeräts (FG) in der dezentralen Datenbank (DB) zu entschlüsseln und zu lesen, und wobei die dezentrale Datenbank (DB) ausgestaltet ist, Smart Contracts als Programmcode mittels den Teilnehmerknoten (TK1, TK2, ..., TK6) zu speichern und auszuführen;
- Ein Feldgerät (FG) der Automatisierungstechnik,
mit einer Elektronikeinheit (EL), wobei die Elektronikeinheit (EL) ausgestaltet ist, einen Distributed-Ledger-Softwarestack auszuführen, und
mit einer Kommunikationsschnittstelle (KS) zum Aufbauen einer Kommunikationsverbindung zu der dezentralen Datenbank (DB) über ein drahtloses oder drahtgebundenes Kommunikationsnetzwerk (KN),
wobei das Feldgerät (FG) ausgestaltet ist, Daten (DATA) zu erzeugen, umfassend nachweispflichtige Messwerte und Kalibrierzertifikate, wobei die Kalibrierzertifikate Informationen über den Gültigkeitsbeginn und das Gültigkeitsende des entsprechenden Kalibrierzertifikats enthalten,
wobei das Feldgerät (FG) nach Ausführen des Distributed-Ledgers-Softwarestacks als Light-Node der dezentralen Datenbank (DB) wirkt und ausgestaltet ist, die Daten (DATA) über das Kommunikationsnetzwerk (KN) an die dezentrale Datenbank (DB) zu übermitteln, mit einem Zeitstempel zu versehen und verschlüsselt in die dezentrale Datenbank (DB) zu schreiben
wobei die validierfähigen Teilnehmerknoten (TK1, TK2, TK3, TK4) ausgestaltet sind, die übermittelten Daten (DATA) zu validieren, wobei die dezentrale Datenbank (DB) ausgestaltet ist, die Daten (DATA) zu speichern, wenn zumindest ein vorbestimmten Anteil der validierfähigen Teilnehmerknoten (TK1, TK2, TK3, TK4) die Daten (DATA) erfolgreich validiert, und wobei die leseberechtigten Teilnehmerknoten (TK5, TK6) ausgestaltet sind, die Smart Contracts beim Lesen der Daten (DATA) auszuführen und durch Ausführen von einem der Smart Contracts das Kalibrierzertifikat zu überprüfen, ob dieses für einen bestimmten Messwert des Feldgeräts noch gültig war.

2. System nach Anspruch 1, wobei zumindest einer der Teilnehmerknoten (TK1, TK2, ..., TK6), oder ein mit der dezentralen Datenbank (DB) verbundenes Gerät, ausgestaltet ist, ein Analyseprogramm auszuführen,
wobei das Analyseprogramm ausgestaltet ist, Alarmmeldungen auf Basis einer Analyse der in der dezentralen Datenbank (DB) gespeicherten nachweispflichtige Messwerte des Feldgeräts (FG) zu generieren.

3. System nach Anspruch 2, wobei das Analyseprogramm ausgestaltet ist, die gespeicherten nachweispflichtigen Messwerte des Feldgeräts (FG) im Zuge der Analyse mit zumindest einem vorbestimmten Grenzwert zu vergleichen, und
wobei das Analyseprogramm ausgestaltet ist, die Alarmmeldung in dem Falle zu generieren, wenn zumindest einer der nachweispflichtigen Messwerte den vorbestimmten Grenzwert überschreitet, bzw. unterschreitet.

4. System nach zumindest einem der vorherigen Ansprüche, wobei es sich bei der dezentralen Datenbank (DB) um eine private Datenbank handelt.

5. System nach zumindest einem der vorherigen Ansprüche, wobei das Kommunikationsnetzwerk (KN) auf einem Ethernetprotokoll beruht.

6. System nach Anspruch 1, zusätzlich umfassend einen weiteren Light-Node der dezentralen Datenbank (DB) in Form Automatisierungskomponente, insbesondere eine Steuereinheit, oder eines weiteren Feldgeräts, wobei der weitere Light-Node einen Zeitgeber aufweist und ausgestaltet ist, Zeitstempel zu generieren und an die dezentrale Datenbank (DB) zu übermitteln, wobei die dezentrale Datenbank (DB) ausgestaltet ist, die in den Daten (DATA) des Feldgeräts (FG) enthaltenen Zeitstempel mit den Zeitstempel des weiteren Light-Nodes abzugleichen.

7. Verfahren zum manipulationssicheren Verwalten von Daten (DATA) eines Feldgeräts (FG) mittels einer dezentralen Datenbank (DB) nach der Distributed-Ledger-Technik, insbesondere eine Blockchain, wobei die dezentrale Datenbank (DB) eine Vielzahl von Teilnehmerknoten (TK1, TK2, ..., TK6), bestehend aus validierfähigen und/oder leseberechtigen Teilnehmerknoten (TK1, TK2, TK3, TK4), umfasst, wobei ein Feldgerät (FG) der Automatisierungstechnik bereitgestellt wird, welches eine Elektronikeinheit (EL) und eine Kommunikationsschnittstelle (KS) aufweist, wobei die dezentrale Datenbank (DB) ausgestaltet ist, Smart Contracts als Programmcode mittels den Teilnehmerknoten (TK1, TK2, ..., TK6) zu speichern und auszuführen, umfassend:
- Etablieren einer Kommunikationsverbindung zwischen dem Feldgerät (FG) und der dezentralen Datenbank (DB) mittels der Kommunikationsschnittstelle (KS) über ein drahtgebundenes oder drahtloses Kommunikationsnetzwerk (KN);
- Hinzufügen des Feldgeräts (FG) zu der dezentralen Datenbank (DB) als Light-Node durch Ausführen eines Distributed-Ledger-Softwarestack mittels der Elektronikeinheit (EL);
- Erzeugen von Daten (DATA) mittels des Feldgeräts (FG), umfassend nachweispflichtige Messwerte und Kalibrierzertifikate, wobei die Kalibrierzertifikate Informationen über den Gültigkeitsbeginn und das Gültigkeitsende des entsprechenden Kalibrierzertifikats enthalten;
- Übermitteln der Daten (DATA) über das Kommunikationsnetzwerk (KN) an die dezentrale Datenbank (DB) über das Kommunikationsnetzwerk (KN), wobei die Daten (DATA) mit einem Zeitstempel versehen und verschlüsselt werden:
- Validieren der dezentralen Datenbank (DB) mittels der validierfähigen Teilnehmerknoten (TK1, TK2, TK3, TK4);
- Schreiben der Daten (DATA) in die dezentrale Datenbank (DB), wenn zumindest ein vorbestimmter Anteil der validierfähigen Teilnehmerknoten (TK1, TK2, TK3, TK4) die Daten (DATA) erfolgreich validiert;
- Entschlüsseln und Lesen der Daten (DATA) mittels leseberechtigten Teilnehmerknoten (TK5, TK6), wobei die Smart Contracts beim Lesen der Daten (DATA) ausgeführt werden, wobei durch Ausführen von einem der Smart Contracts das Kalibrierzertifikat überprüft wird, ob dieses für einen bestimmten Messwert des Feldgeräts noch gültig war.

## Claims

1. A system for the manipulation-proof management of data of a field device (FG) from the field of automation technology, comprising:
- A decentralized database (DB) based on distributed ledger technology, in particular a blockchain,
comprising a number of participating nodes (TK1, TK2, ... , TK6), comprising validatable participating nodes (TK1, TK2, TK3, TK4) and read-authorized participating nodes (TK5, TK6), wherein the read-authorized participating nodes (TK5, TK6) are configured to decrypt and read the saved data (DATA) of the field device (FG) in the decentralized database (DB), and wherein the decentralized database (DB) is configured to save and execute smart contracts as a program code using the participating nodes (TK1, TK2, ... , TK6);
- A field device (FG) from the field of automation technology,
with an electronic unit (EL), wherein the electronic unit (EL) is configured to execute a distributed ledger software stack, and
with a communication interface (KS) for establishing a communication connection to the decentralized database (DB) via a wireless or wired communication network (KN), wherein the field device (FG) is configured to generate data (DATA), comprising reportable measured values and calibration certificates, wherein the calibration certificates contain information about the start of validity and the end of validity of the relevant calibration certificate,
wherein the field device (FG) acts as a light node of the decentralized database (DB) after executing the distributed ledger software stack and is configured to transmit the data (DATA) to the decentralized database (DB) via the communication network (KN), to give it a timestamp, and to write it to the decentralized database (DB) in encrypted form,
wherein the validatable participating nodes (TK1, TK2, TK3, TK4) are configured to validate the transmitted data (DATA), wherein the decentralized database (DB) is configured to save the data (DATA), if at least a predetermined proportion of the validatable participating nodes (TK1, TK2, TK3, TK4) successfully validates the data (DATA), and wherein the read-authorized participating nodes (TK5, TK6) are configured to execute the smart contracts while the data (DATA) is being read and to check the calibration certificate by executing one of the smart contracts to verify whether it was still valid for a certain measured value of the field device.

2. The system as claimed in claim 1, wherein at least one of the participating nodes (TK1, TK2, ... , TK6), or a device connected to the decentralized database (DB), is configured to execute an analysis program,
wherein the analysis program is configured to generate alarm messages based on an analysis of the reportable measured values of the field device (FG) saved in the decentralized database (DB).

3. The system as claimed in claim 2, wherein the analysis program is configured to compare the saved reportable measured values of the field device (FG) with at least one predetermined limit value during the analysis, and
wherein the analysis program is configured to generate the alarm message in the event that at least one of the reportable measured values is above or below the predetermined limit value.

4. The system as claimed in at least one of the preceding claims, wherein the decentralized database (DB) is a private database.

5. The system as claimed in at least one of the preceding claims, wherein the communication network (KN) is based on an Ethernet protocol.

6. The system as claimed in claim 1,
further comprising an additional light node of the decentralized database (DB) in the form of an automation component, in particular a control unit, or an additional field device, wherein the additional light node has a timer and is configured to generate timestamps and transmit them to the decentralized database (DB), wherein the decentralized database (DB) is configured to compare the timestamps contained in the data (DATA) of the field device (FG) with the timestamps of the additional light node.

7. A method for the manipulation-proof management of data (DATA) of a field device (FG) using a decentralized database (DB) based on distributed ledger technology, in particular a blockchain, wherein the decentralized database (DB) comprises a number of participating nodes (TK1, TK2, ... , TK6), consisting of validatable and/or read-authorized participating nodes (TK1, TK2, TK3, TK4), wherein a field device (FG) from the field of automation technology is provided, said field device having an electronic unit (EL) and a communication interface (KS), wherein the decentralized database (DB) is configured to save and execute smart contracts as a program code using the participating nodes (TK1, TK2, ... , TK6), comprising:
- Establishing a communication connection between the field device (FG) and the decentralized database (DB) using the communication interface (KS) via a wired or wireless communication network (KN);
- Adding the field device (FG) to the decentralized database (DB) as a light node by executing a distributed ledger software stack using the electronic unit (EL);
- Generating data (DATA) using the field device (FG), comprising reportable measured values and calibration certificates, wherein the calibration certificates contain information about the start of validity and the end of validity of the relevant calibration certificate;
- Transmitting the data (DATA) via the communication network (KN) to the decentralized database (DB) via the communication network (KN), wherein the data (DATA) is given a timestamp and is encrypted;
- Validating the decentralized database (DB) using the validatable participating nodes (TK1, TK2, TK3, TK4);
- Writing the data (DATA) to the decentralized database (DB), if at least a predetermined proportion of the validatable participating nodes (TK1, TK2, TK3, TK4) successfully validates the data (DATA);
- Decrypting and reading the data (DATA) using read-authorized participating nodes (TK5, TK6), wherein the smart contracts are executed while the data (DATA) is being read, wherein by executing one of the smart contracts, the calibration certificate is checked to verify whether it was still valid for a certain measured value of the field device.

## Revendications

1. Système destiné à la gestion inviolable de données d'un appareil de terrain (FG) de la technique d'automatisation, lequel système comprend :
- Une base de données décentralisée (DB) selon la technique DLT (Distributed Ledger Technology), notamment une blockchain,
laquelle base de données comprend une pluralité de nœuds d'abonnés (TK1, TK2, ... , TK6), dont des nœuds d'abonnés apte à la validation (TK1, TK2, TK3, TK4) et des nœuds d'abonnés autorisés à lire (TK5, TK6), les nœuds d'abonnés autorisés à lire (TK5, TK6) étant conçus pour décrypter et lire les données (DATA) mémorisées de l'appareil de terrain (FG) dans la base de données décentralisée (DB), et la base de données décentralisée (DB) étant conçue pour mémoriser et exécuter des contrats intelligents (Smart Contracts) sous forme de code de programme au moyen des nœuds d'abonnés (TK1, TK2, ...., TK6) ;
- Un appareil de terrain (FG) de la technique d'automatisation,
avec une unité électronique (EL), l'unité électronique (EL) étant conçue pour exécuter une pile logicielle Distributed Ledger, et
avec une interface de communication (KS) destinée à établir une liaison de communication avec la base de données décentralisée (DB) via un réseau de communication sans fil ou filaire (KN),
l'appareil de terrain (FG) étant conçu pour générer des données (DATA), lesquelles comprennent des valeurs mesurées soumises à l'obligation de preuve, ainsi que des certificats d'étalonnage, les certificats d'étalonnage contenant des informations sur le début de validité et la fin de validité du certificat d'étalonnage correspondant,
l'appareil de terrain (FG) agissant, après l'exécution de la pile logicielle Distributed Ledger, en tant que nœud léger de la base de données décentralisée (DB) et lequel appareil de terrain est conçu pour transmettre les données (DATA) à la base de données décentralisée (DB) par l'intermédiaire du réseau de communication (KN), pour les munir d'un horodatage et les écrire sous forme cryptée dans la base de données décentralisée (DB),
les nœuds d'abonnés aptes à la validation (TK1, TK2, TK3, TK4) étant conçus pour valider les données transmises (DATA), la base de données décentralisée (DB) étant conçue pour stocker les données (DATA) lorsqu'au moins une proportion prédéterminée des nœuds d'abonnés aptes à la validation (TK1, TK2, TK3, TK4) valide avec succès les données (DATA), et les nœuds d'abonnés autorisés à lire (TK5, TK6) étant conçus pour exécuter les Smart Contracts lors de la lecture des données (DATA) et pour vérifier, en exécutant l'un des Smart Contracts, le certificat d'étalonnage pour savoir si celui-ci était encore valable pour une valeur mesurée déterminée de l'appareil de terrain.

2. Système selon la revendication 1, pour lequel au moins l'un des nœuds d'abonnés (TK1, TK2, ..., TK6), ou un appareil relié à la base de données décentralisée (DB), est conçu pour exécuter un programme d'analyse,
le programme d'analyse étant conçu pour générer des messages d'alarme sur la base d'une analyse des valeurs mesurées - soumises à l'obligation de preuve - de l'appareil de terrain (FG), lesquelles valeurs sont mémorisées dans la base de données décentralisée (DB).

3. Système selon la revendication 2,
pour lequel le programme d'analyse est conçu pour comparer, au cours de l'analyse, les valeurs mesurées soumises à l'obligation de preuve et mémorisées dans l'appareil de terrain (FG), à au moins une valeur limite prédéterminée, et pour lequel le programme d'analyse est conçu pour générer le message d'alarme dans le cas où au moins l'une des valeurs mesurées soumises à l'obligation de preuve est supérieure ou inférieure à la valeur limite prédéterminée.

4. Système selon l'une des revendications précédentes, pour lequel la base de données décentralisée (DB) est une base de données privée.

5. Système selon l'une des revendications précédentes, pour lequel le réseau de communication (KN) est basé sur un protocole Ethernet.

6. Système selon la revendication 1, lequel système comprend en outre un autre nœud léger de la base de données décentralisée (DB) sous forme de composant d'automatisation, notamment une unité de commande, ou d'un autre appareil de terrain, l'autre nœud léger présentant une horloge et étant conçu pour générer des horodateurs et les transmettre à la base de données décentralisée (DB), la base de données décentralisée (DB) étant conçue pour comparer les horodateurs contenus dans les données (DATA) de l'appareil de terrain (FG) avec les horodateurs de l'autre nœud léger.

7. Procédé destiné à la gestion inviolable de données (DATA) d'un appareil de terrain (FG) au moyen d'une base de données décentralisée (DB) selon la technique DLT (Distributed Ledger Technology), notamment une blockchain, la base de données décentralisée (DB) comprenant une pluralité de nœuds d'abonnés (TK1, TK2, ... TK6), constituée de nœuds d'abonnés (TK1, TK2, TK3, TK4) aptes à la validation et/ou autorisés à lire, un appareil de terrain (FG) de la technique d'automatisation étant mis à disposition, lequel présente une unité électronique (EL) et une interface de communication (KS), la base de données décentralisée (DB) étant conçue pour mémoriser et exécuter des Smart Contracts sous forme de code de programme au moyen des nœuds d'abonnés (TK1, TK2, ..., TK6), lequel procédé comprend les étapes suivantes :
- Établissement d'une liaison de communication entre l'appareil de terrain (FG) et la base de données décentralisée (DB) au moyen de l'interface de communication (KS) par l'intermédiaire d'un réseau de communication filaire ou sans fil (KN) ;
- Ajout de l'appareil de terrain (FG) à la base de données décentralisée (DB) en tant que nœud léger en exécutant une pile logicielle Distributed Ledger au moyen de l'unité électronique (EL) ;
- Génération de données (DATA) au moyen de l'appareil de terrain (FG), lesquelles données comprennent des valeurs mesurées soumises à l'obligation de preuve, ainsi que des certificats d'étalonnage, les certificats d'étalonnage contenant des informations sur le début de validité et la fin de validité du certificat d'étalonnage correspondant ;
- Transmission des données (DATA) à la base de données décentralisée (DB) par l'intermédiaire du réseau de communication (KN), les données (DATA) étant munies d'un horodatage et cryptées ;
- Validation de la base de données décentralisée (DB) au moyen des nœuds d'abonnés aptes à la validation (TK1, TK2, TK3, TK4) ;
- Écriture des données (DATA) dans la base de données décentralisée (DB) lorsqu'au moins une proportion prédéterminée des nœuds d'abonnés aptes à la validation (TK1, TK2, TK3, TK4) valide avec succès les données (DATA) ;
- Décryptage et lecture des données (DATA) au moyen des nœuds d'abonnés autorisés à lire (TK5, TK6), les Smart Contracts étant exécutés lors de la lecture des données (DATA), l'exécution de l'un des Smart Contracts permettant de vérifier le certificat d'étalonnage pour savoir si celui-ci était encore valable pour une valeur mesurée déterminée de l'appareil de terrain.
